# EUROPÄISCHE PATENTSCHRIFT

(11) **EP 3 261 200 B1**
(45) Veröffentlichungstag und Bekanntmachung des Hinweises auf die Patenterteilung: **10.06.2020**
(21) Anmeldenummer: 16201495.5
(22) Anmeldetag: 30.11.2016
(51) Int. Cl.: H02B 13/065, G01L 19/00, H01H 33/26, H01H 33/56

(54) **SENSORSYSTEM FÜR SCHALTANLAGEN**
SENSOR SYSTEM FOR SWITCHGEAR
SYSTÈME DE DÉTECTION POUR INSTALLATIONS DE DISTRIBUTION

(30) Priorität: 23.06.2016 DE 102016007635
(43) Veröffentlichungstag der Anmeldung: 27.12.2017
(73) Patentinhaber: WIKA Alexander Wiegand SE & Co. KG, 63911 Klingenberg/Main (DE)
(72) Erfinder: BÖTTCHER, Arthur, 63834 Sulzbach am Main (DE); DIENER, Markus, 63820 Elsenfeld (DE); HECKLER, Thomas, 63920 Großheubach (DE); HEIN, Alexander, 63868 Großwallstadt (DE)
(74) Vertreter: Finger, Catrin

(56) Entgegenhaltungen:
- EP-A2- 1 132 746
- CN-A- 101 149 420
- DE-A1- 2 216 238
- FR-A1- 2 926 370
- JP-A- H0 287 926
- US-A1- 2013 215 548

## Beschreibung

### TECHNISCHES GEBIET

Die Erfindung betrifft ein Sensorsystem zur Ermittlung von physikalischen Größen einer Schaltanlage.

Die Erfindung betrifft weiterhin eine Schaltanlage.

### STAND DER TECHNIK

Aus dem Stand der Technik sind allgemein Schaltanlagen und Sensorsysteme zur Ermittlung von physikalischen Größen solcher Schaltanalagen bekannt.

Aus der DE 34 28 322 A1 ist Verfahren zur Überwachung eines Isoliergases von gasisolierten Hochspannungsschaltanlagen, insbesondere SF₆-isolierten Schaltanlagen, bekannt. Dabei werden das Isoliervermögen kennzeichnende Zustandsgrößen des Isoliergases durch Sensoren erfasst und erzeugte Signale elektronisch weiterverarbeitet und bewertet. Dabei werden als Zustandsgrößen ein Druck, eine Temperatur und eine Dichte bestimmt.

Die FR 2 926 370 A1 beschreibt eine Vorrichtung zum Erfassen eines Lichtbogens in einer Hochspannungsvorrichtung mit einem optischen Sensor und einem Drucksensor.

Weitere Sensorsysteme beschreiben die US 2013/215548 A1, JP H02 87926 A, CN 101 149 420 A und EP 1 132 746 A2.

### AUFGABE DER ERFINDUNG

Der Erfindung liegt die Aufgabe zugrunde, ein gegenüber dem Stand der Technik verbessertes Sensorsystem zur Ermittlung von physikalischen Größen einer Schaltanlage und eine verbesserte Schaltanlage anzugeben.

Die Aufgabe wird hinsichtlich des Sensorsystems durch die im Anspruch 1 angegebenen Merkmale und hinsichtlich der Schaltanlage durch die im Anspruch 15 angegebenen Merkmale gelöst.

Vorteilhafte Ausgestaltungen der Erfindung sind Gegenstand der Unteransprüche.

### ZUSAMMENFASSUNG DER ERFINDUNG

Das erfindungsgemäße Sensorsystem zur Ermittlung von physikalischen Größen einer Schaltanlage umfasst einen zum Anschluss an die Schaltanlage ausgebildeten Sensoranschluss, innerhalb welchem ein Feuchtesensor und ein Drucksensor und Lichtsensor zur Erfassung von Lichtblitzen angeordnet sind.

Das Sensorsystem schafft eine hochintegrierte, kostengünstige Überwachung von Schaltanlagen, wobei Feuchte, Druck und Dichte überwacht werden können. Gleichzeitig ist es möglich, Lichtblitze zu erfassen. Somit wird ermöglicht, dass nur ein Anschluss zur Erfassung der Feuchte, des Drucks, der Dichte und der Lichtblitze und nur eine Auswertung an der Schaltanlage erforderlich sind.

Die Erfassung der Lichtblitze ermöglicht eine Erfassung von Schaltlichtbögen in der Schaltanlage, welche unter ungünstigen oder nicht optimalen Bedingungen entstehen können. Solche ungünstigen Bedingungen liegen beispielsweise vor, wenn die Feuchte in einem Schutzgas der Schaltanlage zu hoch ist. Aus einer Häufigkeit eines Auftretens der Lichtblitze oder aus deren Intensität kann auf eine Funktionsfähigkeit und einen Wartungszustand der Schaltanlage geschlossen werden, so dass bei einer Überschreitung einer vorgegebenen Häufigkeit des Auftretens der Lichtblitze beispielsweise eine Warnung ausgegeben werden kann, dass die Schaltanlage gewartet werden muss.

In einer möglichen Ausgestaltung ist das Sensorsystem dazu ausgebildet, die Feuchte, den Druck, die Dichte und/oder die Lichtblitze in mit einem Schutzgas, wie beispielsweise Schwefelhexafluorid (kurz: SF₆), befüllten Schaltanlagen zu ermitteln. Aufgrund dessen, dass nur ein Anschluss zur Erfassung der Feuchte, des Drucks, der Dichte und der Lichtblitze und nur eine Auswertung an der Schaltanlage erforderlich sind, ist eine fluidische Abdichtung der Schaltanlage erleichtert und eine Gefahr von austretendem Schutzgas verringert.

Im Vergleich zum Stand der Technik ermöglicht diese Integration der kompletten Diagnose-Sensorik zur Ermittlung von Feuchte, Druck, Dichte und Lichtblitzen zur Anlagenüberwachung in einem Gerät die signaltechnische Aufbereitung direkt vor Ort am Prozess. Hinsichtlich EMV-Eigenschaften und hinsichtlich eines Verdrahtungsaufwands in der Anlage ergeben sie damit deutliche Vorteile. Insbesondere wird so auch eine Anfälligkeit von elektrischen Steckverbindungen und Verkabelungen kompensiert und/oder minimiert. Ausfälle und Fehlermeldungen durch schadhafte elektrische Sensorverbindungen werden durch die Integration in ein Gerät minimiert. Ebenfalls ist eine Anzahl von Dichtstellen auf einen gemeinsamen Prozessanschluss minimiert.

In einer weiteren möglichen Ausgestaltung umfasst das Sensorsystem zumindest eine Abdeckung, welche die im Sensoranschluss angeordneten Sensoren vor mechanischer Beschädigung schützt. Die Abdeckung ist beispielsweise als Lochblech oder Lochabdeckung ausgebildet, welches bzw. welche mit Durchlassöffnungen versehen ist. Hierdurch wird sichergestellt, dass eine fluidische Verbindung zwischen den im Sensoranschluss angeordneten Sensoren und der Schaltanlage zur Ermittlung der Feuchte, des Drucks und der Dichte vorliegt.

Der Sensoranschluss wird nach Herstellung vorzugsweise mit einer Konditionierung versehen, und hiernach mit einer temporären Kappe bis zum Einbau verschlossen. Die Konditionierung ist vorzugsweise ein Gasgemisch, was in den Anschluss eingebracht wird.

Eine Weiterbildung des Sensorsystems sieht vor, dass der Feuchtesensor dem Drucksensor vorgelagert ist. Das bedeutet, dass die Messstelle, an der die Feuchtemessung des Schutzgases stattfindet, im Sensoranschluss vor der Messstelle der Druckmessung liegt. Dadurch kann sichergestellt werden, dass die gemessene Feuchte des Schutzgases dem gemessenen Druck zugeordnet werden kann. Dies hat aufgrund der Reihenfolge und Anordnung eine direkte Auswirkung auf die Signalverkabelung, eine Entfernung des Sensors zur Platine und somit eine Optimierung der Signalübermittlung in Qualität und Zeit.

Auch ist es möglich, dass der Lichtsensor dem Feuchtesensor und dem Drucksensor vorgelagert ist. Hierdurch können die Lichtblitze sehr nah an der Schaltanlage und somit besonders zuverlässig und genau erfasst werden.

Eine mögliche Ausgestaltung des Sensorsystems sieht vor, dass in den Feuchtesensor ein Temperatursensor integriert oder der Feuchtesensor mit einem Temperatursensor gekoppelt ist. Hierdurch ist in einfacher Weise eine Kompensation des Feuchtesignals mit der erfassten Temperatur möglich. Dabei ist es möglich, dass der Temperatursensor dem Feuchtesensor vorgelagert angeordnet ist. Das bedeutet, dass die Messstelle, an der die Temperaturmessung des Schutzgases stattfindet, direkt vor der Messstelle der Feuchtemessung des Schutzgases liegt. Dadurch kann sichergestellt werden, dass die gemessene Temperatur des Schutzgases der gemessenen Feuchte des Schutzgases entspricht bzw. zugeordnet werden kann.

Eine weitere mögliche Ausgestaltung des Sensorsystems sieht vor, dass in den Drucksensor ein weiterer Temperatursensor integriert ist oder der Drucksensor mit einem Temperatursensor gekoppelt ist. Hierdurch ist in einfacher Weise eine Kompensation des Drucksignals mit der erfassten Temperatur aus einem erfassten Druck und der Temperatur eine Ermittlung einer Dichte möglich. Dabei ist es möglich, dass der Temperatursensor dem Drucksensor vorgelagert angeordnet ist. Das bedeutet, dass die Messstelle, an der die Temperaturmessung des Schutzgases stattfindet, direkt vor der Messstelle der Druckmessung des Schutzgases liegt. Dadurch kann sichergestellt werden, dass die gemessene Temperatur des Schutzgases dem gemessenen Druck des Schutzgases entspricht bzw. zugeordnet werden kann.

Zu einer zuverlässigen und einfachen Druckermittlung weist der Feuchtesensor in einer Weiterbildung des Sensorsystems Durchlassöffnungen auf, welche einen Druck bzw. Prozessdruck innerhalb der Schaltanlage an den Drucksensor heranführen.

Beispielsweise ist vorgesehen, dass elektrische Kontakte elektrische Signale vom Feuchtesensor zu einer Feuchtesensorplatine übertragen, wobei die elektrischen Kontakte in Glas eingeschmolzen und innerhalb des Sensoranschlusses angeordnet sind. Hierdurch wird in einfacher Weise eine fluiddichte Ausführung des Sensorsystems realisiert und die elektrischen Kontakte sind elektrisch von ihrer Umgebung isoliert. Daraus resultiert wiederum eine zuverlässige Übertragung der elektrischen Signale.

In einer Weiterbildung des Sensorsystems ermittelt die Auswerteplatine anhand einer mittels des zugehörigen Temperatursensors erfassten Temperatur ein temperaturkompensiertes Feuchtesignal und überträgt dieses über eine Schnittstelle als digitales Datensignal an eine übergeordnete Messwarte oder eine Anzeige, wodurch eine optische Ausgabe des temperaturkompensierten Feuchtesignals ermöglicht wird.

Eine Ausgestaltung des Sensorsystems sieht vor, dass eine Auswerteplatine des Drucksensors anhand einer mittels des zugehörigen Temperatursensors erfassten Temperatur ein temperaturkompensiertes Drucksignal ermittelt und das temperaturkompensierte Drucksignal über eine Schnittstelle als digitales Datensignal an eine übergeordnete Messwarte oder eine Anzeige überträgt, wodurch eine optische Ausgabe des temperaturkompensierten Drucksignals ermöglicht wird.

Weiterhin ist es möglich, dass ein anhand der Temperatur und des Drucksignals ermitteltes Dichtesignal über eine Schnittstelle als digitales Datensignal an eine übergeordnete Messwarte oder eine Anzeige übertragbar ist, wodurch eine optische Ausgabe des Dichtesignals ermöglicht wird.

In einer möglichen Ausgestaltung des Sensorsystems ist für das temperaturkompensierte Feuchtesignal zumindest ein Schwellwert hinterlegt, wobei zumindest eine Signalerzeugungseinheit vorgesehen ist, die bei Erreichen oder Überschreiten des zumindest eines Schwellwerts ein zusätzliches Signal abgibt. Hierdurch kann in einfacher Weise bei Erreichen oder Überschreitung des Schwellwerts eine Warnung ausgegeben werden.

In einer weiteren möglichen Ausgestaltung des Sensorsystems ist der Lichtsensor mit zumindest einem Lichtleiter zur Übertragung der Lichtblitze von einem Entstehungsort an den Lichtsensor gekoppelt. Hierdurch kann der Lichtsensor selbst an einer von dem Entstehungsort der Lichtblitze entfernten, insbesondere einer geschützten Position innerhalb des Sensoranschlusses angeordnet sein. Weiterhin kann aufgrund der Verwendung des Lichtleiters die Position des Lichtsensors variabel und zumindest nahezu frei innerhalb des Sensoranschlusses gewählt werden. Somit ist dieser in einfacher Weise an unterschiedliche Verwendungen anpassbar.

Dabei kann der Lichtleiter über den Sensoranschluss hinaus in die Schaltanlage hineinragen. Hierdurch können die Lichtblitze in der Schaltanlage selbst und somit besonders zuverlässig und genau erfasst werden.

Um die Erfassung weiter zu verbessern, ist in einer möglichen Ausgestaltung an einem der Schaltanlage zugewandten vorderen Ende des Lichtleiters eine optische Linse angeordnet, welche das innerhalb der Schaltanlage vorhandene Licht bündelt und über den Lichtleiter dem Lichtsensor zuführt.

In einer weiteren möglichen Ausgestaltung des Sensorsystems umfasst der Lichtleiter auf einer prozesszugewandten Seite eine Koppeleinrichtung zur Adaptierung einer externen Lichtquelle zur Durchführung eines Funktionstests. Mittels dieses Funktionstests kann in einfacher Weise eine Funktionsfähigkeit des Sensorsystems überprüft werden.

Um bei Bedarf eine Empfindlichkeit des Lichtsensors nachzujustieren, sieht eine Weiterbildung des Sensorsystems vor, dass dieses eine integrierte Selbsttesteinrichtung zur einmaligen oder zyklischen Gerätediagnose umfasst, wobei die Selbsttesteinrichtung mittels einer integrierten Lichtquelle in den Lichtleiter testweise Licht einkoppelt und anhand des eingekoppelten Lichts eine Funktion des Lichtsensors überprüft.

In einer Weiterbildung des Sensorsystems ist vorgesehen, dass der Lichtleiter mittels einer Glasdurchführung zum Sensoranschluss durch einen Anschlussbereich geführt ist. Hierdurch wird in einfacher Weise eine fluiddichte Ausführung des Sensorsystems realisiert.

Zu einer solchen fluiddichten Ausführung ist der Sensoranschluss mit einem Adapter, einem Verschlussstück oder einem Kupplungsstück dichtend verschlossen. Hierdurch ist ein Öffnen des Sensorsystems, beispielsweise zu einer Wartung oder zu einem Tausch der Sensoren, möglich.

Beispielsweise weist das Kupplungsstück einen freien Anschlussdurchmesser von 15 mm bis 25 mm, insbesondere mindestens 20 mm, auf. Ein derartiger Durchmesser hat sich als besonders geeignet zur Messwerterfassung herausgestellt. Bei einer Vergrößerung oder Verkleinerung dieses Durchmessers wird ein Kosten-Nutzen-Verhältnis verschlechtert und eine Komplexität eines Aufbau des Sensorsystems erhöht.

Weiterhin ist in einer möglichen Ausgestaltung ein vom Kupplungsstück umgebener Innenraum evakuiert oder mit einem Schutzgas befüllt, um innerhalb des Kupplungsstücks eine elektrisch isolierende und lichtbogenlöschende Wirkung zu erzielen.

Die erfindungsgemäße Schaltanlage ist insbesondere mit einem Schutzgas befüllt und umfasst zumindest ein zuvor beschriebenes Sensorsystem.

### KURZBESCHREIBUNG DER ZEICHNUNGEN

Ausführungsbeispiele der Erfindung werden im Folgenden anhand von Zeichnungen näher erläutert.

Dabei zeigen:
- Fig. 1: schematisch eine Schnittdarstellung eines Sensorsystems für eine Schaltanlage und
- Fig. 2: schematisch eine Anordnung mit einem Sensorsystem und einem Kupplungsstück.

Einander entsprechende Teile sind in allen Figuren mit den gleichen Bezugszeichen versehen.

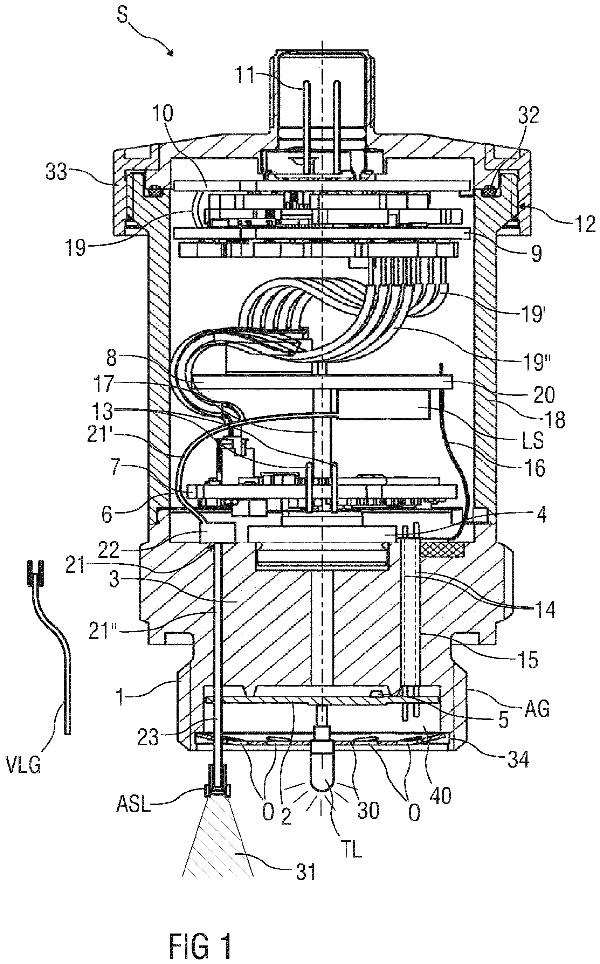

In Figur 1 ist ein mögliches Ausführungsbeispiel eines erfindungsgemäßen Sensorsystems S zur Ermittlung von physikalischen Größen einer nicht gezeigten Schaltanlage dargestellt. Die Schaltanlage ist dabei insbesondere mit einem Schutzgas, beispielsweise mit Schwefelhexafluorid (kurz: SF₆), befüllt.

Das Sensorsystem S umfasst einen zum Anschluss an die Schaltanlage ausgebildeten, d. h. einen zum zu überwachenden Prozess gerichteten, Sensoranschluss 1. Weiterhin umfasst das Sensorsystem S ein hülsenförmiges Gehäuse 18, welches beispielsweise aus einem Edelstahlrohr gebildet ist.

Innerhalb des Sensoranschlusses 1 ist ein zum Prozess, d. h. zur Schaltanlage, nach vorne gerichteter und gelagerter Feuchtesensor 2 angeordnet. Der Sensoranschluss 1 umfasst in einer Abdeckung 30 Durchlassöffnungen 0, welche einen Prozessdruck innerhalb der Schaltanlage an einen hinter dem Feuchtesensor 2 angeordneten Drucksensor 4 heranführen, so dass dieser an den Prozess angebunden ist. Der Drucksensor 4 ist hierzu auf eine in dem Sensoranschluss 1 angeformte Stufe 3 zum Feuchtesensor 2 beabstandet befestigt, beispielsweise aufgeschweißt.

Die Abdeckung 30 ist als so genanntes Lochblech ausgebildet und im Sensoranschluss 1 zum Schutz der Sensoren vor mechanischer Beschädigung angeordnet. Die Abdeckung ist in einen umlaufenden Ringspalt 34 montiert und ist vorgespannt oder verpresst. Hierzu ist die Abdeckung 30 in montierter Lage mit einem Radius versehen. Die Abdeckung 30 ist beispielsweise aus Edelstahl gebildet, wobei die Durchlassöffnungen 0 zusätzlich eine einfache Demontage mit einem hakenförmigen Werkzeug ermöglichen.

In den Feuchtesensor 2 ist ein Temperatursensor 5 integriert oder der Temperatursensor 5 ist mit dem Feuchtesensor 2 gekoppelt. Im vorliegenden Ausführungsbeispiel ist der Temperatursensor 5 direkt auf dem Feuchtesensor 2 angeordnet.

Auch in den Drucksensor 4 ist ein Temperatursensor 6 integriert oder der Temperatursensor 6 ist mit dem Drucksensor 4 gekoppelt, wobei der Temperatursensor 6 im vorliegenden Ausführungsbeispiel über eine beispielsweise als Silikonkissen ausgebildete Wärmebrücke an den Drucksensor 4 angekoppelt ist.

Dadurch, dass sowohl der Feuchtesensor 2 als auch der Drucksensor 4 direkt angekoppelte Temperatursensoren 5, 6 aufweisen, kann das jeweilige Sensorsignal auf die tatsächliche Sensortemperatur angepasst werden. Das heißt, es kann ein temperaturkompensiertes Feuchtesignal und ein temperaturkompensiertes Drucksignal erzeugt werden.

Direkt hinter dem Drucksensor 4 ist eine diesem zugeordnete Auswerteplatine 7 zur Auswertung der vom Drucksensor 4 und Temperatursensor 6 erfassten Daten und zur Ermittlung des Prozessdrucks und der zugehörigen Temperatur aus diesen Daten angeordnet. Hierzu wertet die Auswerteplatine 7 sowohl vom Drucksensor 4 ein übertragenes über Anschlüsse 13 an diese übertragene Druckdaten als auch vom Temperatursensor 6 übertragene Temperaturdaten aus. Durch die direkte ortsnahe Positionierung der Auswerteplatine 7 am Drucksensor 4 sind Leitungswege vom Drucksensor 4 über die Anschlüsse 13 zur Auswerteplatine 7 sehr kurz und somit verlustarm ausgeführt. Somit ist es möglich, dass der Drucksensor 4 gemeinsam mit der Auswerteplatine 7 ein sehr präzises, temperaturkompensiertes Drucksignal bereitstellen kann.

Die Auswerteplatine 7 umfasst ebenfalls Mittel zur Nullpunktstabilisierung und Korrekturdaten zum Drucksensor 4, welche insbesondere kompensatorisch bei einem Abgleich während einer Herstellung des Drucksensors 4 auf der Auswerteplatine 7 hinterlegt worden sind.

Der Auswerteplatine 7 ist nachgelagert eine Auswerteplatine 8 zur Auswertung vom Feuchtesensor 2 erfasster Daten angeordnet.

Die Auswerteplatine 8 ist über eine mechanisch flexible Leiterfolie 16 an Anschlüsse 14, insbesondere so genannte Anschlusspins, angebunden, welche gedichtet durch eine Glasdurchführung 15 im vorderen Bereich des Sensoranschlusses 1 Daten des Feuchtesensors 2 empfängt.

Innerhalb des Sensorsystems werden die Daten des Feuchtesensors 2 und die Daten des zugeordneten Temperatursensors 5 über die Leiterfolie 16 an die Auswerteplatine 8 weitergeführt, um ein temperaturkompensiertes Feuchtesignal zu ermitteln.

Auf der Auswerteplatine 8 ist weiterhin eine Lichtblitzauswerteeinheit angeordnet, welche einen vorzugsweise aus einem Fotodetektor gebildeten Lichtsensor 20 umfasst. Dieser ist mit einem Lichtleiter 21 mit dem Sensoranschluss 1 verbunden, wobei in einem nicht dargestellten Ausführungsbeispiel zumindest ein vorderes Ende 21" des Lichtleiters 21 durch eine nicht gezeigte Glasdurchführung zum Sensoranschluss 1 hindurchgeführt ist.

Im dargestellten Ausführungsbeispiel ist der Lichtleiter 21 zweiteilig mit einem vorderen Ende 21" und einem hinteren Ende 21' ausgeführt, wobei das vordere Ende 21" und das hintere Ende 21' mittels einer Koppelstelle 22 miteinander gekoppelt sind.

Das vordere Ende 21" des Lichtleiters 21 ist gestützt durch den Feuchtesensor 2 oder eine andere Struktur.

Zur Durchführung des vorderen Endes 21" des Lichtleiters 21 durch die Abdeckung 30 weist diese in einem Bereich 23 eine Ausnehmung auf, so dass Lichtblitze in einem Einfallwinkel 31 erfasst und ausgewertet werden können.

Dabei kann das vordere Ende 21" des Lichtleiters 21 über den Sensoranschluss 1 hinaus in die Schaltanlage hineinragen. Um die Erfassung weiter zu verbessern, ist in einer nicht gezeigten möglichen Ausgestaltung an dem vorderen Ende 21" des Lichtleiters 21 eine optische Linse angeordnet, welche das innerhalb der Schaltanlage vorhandene Licht bündelt und über den Lichtleiter dem Lichtsensor zuführt.

Insbesondere wird überwacht, ob ein Lichtblitz gleichzeitig mit einer Erschütterung oder einem Druckspitzensignal auftritt. Auch können die Intensität eines Lichtblitzes sowie dessen Dauer ausgewertet werden.

Die beiden Auswerteplatinen 7, 8 sind über Stehbolzen 17 an dem zum Prozess gerichteten Sensoranschluss 1 befestigt. Beide Auswerteplatinen 7, 8 geben ihre Signaldaten wiederum an eine übergeordnete Busplatine 9 weiter. Zu dieser Übertragung kommen insbesondere so genannte Litzensteckverbindungen 19, 19', 19" zum Einsatz.

Die Busplatine 9 stellt wahlweise oder parallel die Daten Druck, Feuchte, Temperatur oder die daraus hergeleitete Dichte des am Sensoranschluss 1 anliegenden Prozesses zur Verfügung.

Die Sensordaten werden wahlweise analog oder digital oder in einem kundenspezifischen Busprotokoll zur Verfügung gestellt. Die Daten werden hierzu über ein nach außen gerichtetes, gedichtetes Anschlusssystem 11, welches vorzugsweise mehrere so genannte Steckerpins umfasst, zu einer Anzeige oder einer Messwarte geführt. Hierzu kommt eine weitere zwischen der Busplatine 9 und dem Anschlusssystem 11 gelagerte Anschlussplatine 10 zum Einsatz, auf welcher Mittel zur Herstellung einer elektromagnetischen Verträglichkeit (kurz: EMV) integriert sind und ein Übertragungsverhalten hinsichtlich einer Störanfälligkeit verbessern.

Das Anschlusssystem 11, d. h. die Steckerpins, sind insbesondere per Einpressung oder Umspritzung gedichtet aus einer Gehäusekapsel 12 nach außen geführt.

Für Wartungszwecke kann die Gehäusekapsel 12 mit dem Anschlusssystem 11 vom Gehäuse 18 abgenommen werden und wieder mittels einer als O-Ring ausgebildeten Dichtung 32 und einer Schraubkappe 33 dichtend verschlossen werden.

Wahlweise ist das Anschlusssystem 11 in Form eines Lichtwellenleiters ausgeführt, welcher eine optische Übertragung der Sensorinformationen und -messwerte an eine Leitwarte ermöglicht.

Weiterhin kann der Lichtleiter 21 sowohl innerhalb des Sensoranschlusses 1 geschützt von der Abdeckung enden, oder aber wie dargestellt, aus dem Sensoranschluss 1 herausragen. Optional kann am vorderen Ende 21" des Lichtleiters 21 eine Aufstecklinse ASL aufgesteckt werden.

Weiterhin kann optional eine Verlängerung VLG am Lichtleiter 21 angebracht sein, um den Lichtsensor 20 in einen Adapter oder Anschluss hinein zu verlängern.

Zur Überprüfung des Lichtsensors 20 kann weiterhin eine Testlampe TL innerhalb des Anschlusses oder innerhalb des Geräts an einem Y-Lichtleiter vorgesehen sein, so dass auf Anforderung oder in regelmäßigen vorgegebenen oder programmierten Intervallen ein Ansprechen der Lichtsensorik, d. h. des Lichtsensors 20 überprüft werden kann. So kann auch eine mögliche Verschmutzung der Aufstecklinse ASL oder des Lichtleiters 21 detektiert werden. Ebenfalls kann eine Funktion der Koppelstelle 22 oder der Lichtauswertung LS überprüft werden, insbesondere auch ein Optokoppler, welcher innerhalb der Lichtauswertung LS Lichtsignale in elektrische Signale zur Auswertung umwandelt.

In einer weiteren Ausführungsform der Erfindung ist das Sensorsystem S mit einer Kappe verschlossen oder weist andere Schutzvorrichtungen auf, die eine Vorbelastung der Sensoren vor einer Montage des Sensorsystems S an der Schaltanlage verhindern oder minimieren.

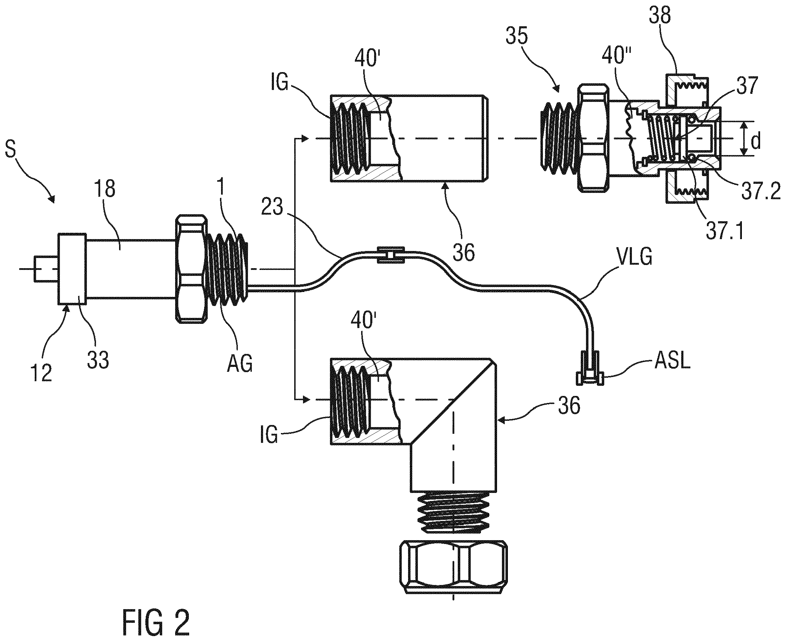

Figur 2 zeigt eine Anordnung mit einem Sensorsystem S gemäß Figur 1 und einem Kupplungsstück 35.

Das Kupplungsstück 35 ist dabei zu einer Kupplung des Sensorsystems S mit der Schaltanlage vorgesehen und umfasst ein Ventil 37, welches erst nach einer fluiddichten Verbindung des Kupplungsstücks 35 mit der Schaltanlage öffnet. Dabei weist das Kupplungsstück 35 insbesondere einen freien Anschlussdurchmesser d von 15 mm bis 25 mm, insbesondere mindestens 20 mm, auf.

Insbesondere umfasst das Kupplungsstück 35 einen Rohradapter, welcher das Ventil 37 in sich aufnimmt. Das Ventil 37 ist aus einem federnd gelagerten Ventilteller 37.1 und einer als O-Ring ausgebildeten Dichtung 37.2 gebildet. Erst bei Kontaktierung mit einem Innenraum der Schaltanlage öffnet sich das Ventil 37 und somit das Kupplungsstück 35 und verbindet so das Sensorsystem S mit einer Anlagen-Atmosphäre. Die Kupplung wird mit einer Überwurfmutter 38 an der Schaltanlage gesichert.

Zur Erkennung von Lichtblitzen ist der Ventilteller 37.1 insbesondere durchsichtig, z.B. aus Glas oder Kunststoff ausgeführt, oder hat optional eine optische Bündelungsfunktion von Lichtblitzen zum Sensor.

Alternativ kann die Lichtsensorik, insbesondere der Lichtleiter 21 aber auch durch einer Verlängerung VLG oder eine Aufstecklinse ASL ergänzt werden, welche dann durch die Adapterteile IG in eine Applikation herein geführt werden.

Zu einer fluiddichten Kopplung des Sensorsystems S mit dem Kupplungsstück 35 ist eine gerade oder als Winkelstück ausgebildete Muffe 36 vorgesehen. Im Falle der Verwendung des Winkelstücks ist weiterhin möglich, eine Glasfaser des Sensors hierdurch zu verlegen, hindurch so zu verlängern, dass diese den Innenraum der Schaltanlage erreicht.

Hierzu wird das Sensorsystem S mit einem am Sensoranschluss 1 befindlichen Außengewinde AG in ein an der Muffe 36 befindliches Innengewinde IG eingeschraubt.

Die Muffe 36 wird wiederum an dem Kupplungsstück 35 befestigt.

Mittels des Sensorsystems S erzeugte Messsignale können aufgrund eines Kontakts mit Umgebungsluft zumindest in einer Anfangszeit der Montage an der Schaltanlage verfälscht sein. Um eine Erfassung des Sensorsystems S nicht zu beeinträchtigen, sind ein innerhalb des Sensoranschlusses 1 vorhandener Innenraum 40, ein innerhalb der Muffe 36 befindlicher Innenraum 40' und ein vom Kupplungsstück 35 umgebener Innenraum 40" evakuiert oder mit einem Schutzgas, wie beispielsweise trockenem Gas, Stickstoff oder Schwefelhexafluorid (kurz: SF₆), befüllt. Die Evakuierung oder Befüllung mit Gas erfolgt insbesondere über das Kupplungsstück 35.

Das Sensorsystem S wird so in einem trockenen, konditionierten Zustand gehalten und kann nach der Montage an der Schaltanlage sofort richtige Messdaten liefern.

Gleichermaßen ist es möglich, dass das Verschließen des Sensorsystems S ohne Gasfüllung und ohne Evakuierung erfolgt, da sich in den Innenräumen 40, 40', 40" eine niedrigere Feuchtigkeit als in der Umgebungsluft einstellen kann.

Die hier aufgeführte Erfindung ist nicht durch die hier dargestellte Ausführung beschränkt sondern kann in vielfältiger Weise variiert werden.

### BEZUGSZEICHENLISTE

- 1: Sensoranschluss
- 2: Feuchtesensor
- 3: Stufe
- 4: Drucksensor
- 5: Temperatursensor
- 6: Temperatursensor
- 7: Auswerteplatine
- 8: Auswerteplatine
- 9: Busplatine
- 10: Anschlussplatine
- 11: Anschlusssystem
- 12: Gehäusekapsel
- 13: Anschluss
- 14: Anschluss
- 15: Glasdurchführung
- 16: Leiterfolie
- 17: Stehbolzen
- 18: Gehäuse
- 19: Litzensteckverbindung
- 19': Litzensteckverbindung
- 19": Litzensteckverbindung
- 20: Lichtsensor
- 21: Lichtleiter
- 21': Ende
- 21": Ende
- 22: Koppelstelle
- 23: Bereich
- 30: Abdeckung
- 31: Einfallwinkel
- 32: Dichtung
- 33: Schraubkappe
- 34: Ringspalt
- 35: Kupplungsstück
- 36: Muffe
- 37: Ventil
- 37.1: Ventilteller
- 37.2: Dichtung
- 38: Überwurfmutter
- 40: Innenraum
- 40': Innenraum
- 40": Innenraum

- AG: Außengewinde
- d: Anschlussdurchmesser
- IG: Innengewinde
- 0: Durchlassöffnungen
- S: Sensorsystem

## Patentansprüche

1. Sensorsystem (S) zur Ermittlung von physikalischen Größen einer Schaltanlage mit
- einem zum Anschluss an die Schaltanlage ausgebildeten Sensoranschluss (1), innerhalb welchem
- ein Feuchtesensor (2) und
- ein Drucksensor (4) und
- ein Lichtsensor (20) zur Erfassung von Lichtblitzen angeordnet sind.

2. Sensorsystem (S) nach Anspruch 1,
**dadurch gekennzeichnet, dass**
- der Feuchtesensor (2) dem Drucksensor (4) vorgelagert ist, so dass eine Messstelle, an der eine Feuchtemessung stattfindet, im Sensoranschluss vor einer Messstelle einer Druckmessung liegt und/oder
- der Lichtsensor (20) dem Feuchtesensor (2) und dem Drucksensor (4) vorgelagert ist.

3. Sensorsystem (S) nach Anspruch 1 oder 2,
**dadurch gekennzeichnet, dass**
- in den Feuchtesensor (2) ein Temperatursensor (5) integriert oder der Feuchtesensor (2) mit einem Temperatursensor (5) gekoppelt ist und/oder
- in den Drucksensor (4) ein Temperatursensor (6) integriert ist oder der Drucksensor (4) mit einem Temperatursensor (6) gekoppelt ist.

4. Sensorsystem (S) nach einem der vorangehenden Ansprüche,
**dadurch gekennzeichnet, dass**
der Feuchtesensor (2) Durchlassöffnungen (0) aufweist,
welche einen Prozessdruck innerhalb der Schaltanlage an den Drucksensor (4) heranführen.

5. Sensorsystem (S) nach einem der vorhergehenden Ansprüche,
**dadurch gekennzeichnet, dass**
- elektrische Kontakte elektrische Signale vom Feuchtesensor (2) zu einer Auswerteplatine (7) übertragen,
- wobei die elektrischen Kontakte in Glas eingeschmolzen und innerhalb des Sensoranschlusses (1) angeordnet sind.

6. Sensorsystem (S) nach Anspruch 5,
**dadurch gekennzeichnet, dass**
- die Auswerteplatine (7) anhand einer mittels des zugehörigen Temperatursensors (5) erfassten Temperatur ein temperaturkompensiertes Feuchtesignal ermittelt und
- das temperaturkompensierte Feuchtesignal über eine Schnittstelle als digitales Datensignal an eine übergeordnete Messwarte oder eine Anzeige überträgt.

7. Sensorsystem (S) nach einem der Ansprüche 3 bis 6, **dadurch gekennzeichnet, dass**
- eine Auswerteplatine (8) des Drucksensors (4) anhand einer mittels des zugehörigen Temperatursensors (6) erfassten Temperatur ein temperaturkompensiertes Drucksignal ermittelt und
- das temperaturkompensierte Drucksignal über eine Schnittstelle als digitales Datensignal an eine übergeordnete Messwarte oder eine Anzeige überträgt und/oder
- ein anhand der Temperatur und des Drucksignals ermitteltes Dichtesignal über eine Schnittstelle als digitales Datensignal an eine übergeordnete Messwarte oder eine Anzeige übertragbar ist.

8. Sensorsystem (S) nach Anspruch 6 oder 7,
**dadurch gekennzeichnet, dass**
- für das temperaturkompensierte Feuchtesignal zumindest ein Schwellwert hinterlegt ist,
- wobei zumindest eine Signalerzeugungseinheit vorgesehen ist, die bei Erreichen oder Überschreiten des zumindest einen Schwellwerts ein zusätzliches Signal abgibt.

9. Sensorsystem (S) nach einem der vorangehenden Ansprüche,
**dadurch gekennzeichnet, dass**
der Lichtsensor (20) mit zumindest einem Lichtleiter (21) zur Übertragung der Lichtblitze von einem Entstehungsort an den Lichtsensor (20) gekoppelt ist.

10. Sensorsystem (S) nach Anspruch 9,
**dadurch gekennzeichnet, dass**
der Lichtleiter (21) auf einer prozesszugewandten Seite eine Koppeleinrichtung zur Adaptierung einer externen Lichtquelle zur Durchführung eines Funktionstests umfasst.

11. Sensorsystem (S) nach Anspruch 9 oder 10, **gekennzeichnet durch**
- eine integrierte Selbsttesteinrichtung zur einmaligen oder zyklischen Gerätediagnose,
- wobei die Selbsttesteinrichtung mittels einer integrierten Lichtquelle in den Lichtleiter (21) testweise Licht einkoppelt und anhand des eingekoppelten Lichts eine Funktion des Lichtsensors (20) überprüft.

12. Sensorsystem (S) nach einem der Ansprüche 9 bis 11, **dadurch gekennzeichnet, dass**
- der Lichtleiter (21) mittels einer Glasdurchführung zum Sensoranschluss (1) durch einen Anschlussbereich geführt ist und/oder- der Lichtleiter (21) über den Sensoranschluss (1) hinausragt und/oder
- an einem der Schaltanlage zugewandten vorderen Ende (21") des Lichtleiters (21) eine optische Linse angeordnet ist.

13. Sensorsystem (S) nach einem der vorangehenden Ansprüche,
**dadurch gekennzeichnet, dass**
der Sensoranschluss (1) mit einem Adapter, einem Verschlussstück oder einem Kupplungsstück (35), insbesondere aufweisend einen freien Anschlussdurchmesser d von 15 mm bis 25 mm, insbesondere mindestens 20 mm, dichtend verschlossen ist.

14. Sensorsystem (S) nach Anspruch 13,
**dadurch gekennzeichnet, dass**
ein vom Kupplungsstück (35) umgebener Innenraum (40") evakuiert oder mit einem Schutzgas befüllt ist.

15. Schaltanlage, welche insbesondere mit einem Schutzgas befüllt ist, umfassend zumindest ein Sensorsystem (S) nach einem der vorangehenden Ansprüche.

## Claims

1. Sensor system (S) for determining physical variables of switchgear, having
- a sensor terminal (1) designed for connection to the switchgear and within which there are arranged
- a humidity sensor (2) and
- a pressure sensor (4) and
- a light sensor (20) for recording light flashes.

2. Sensor system (S) according to Claim 1,
**characterized in that**
- the humidity sensor (2) is arranged upstream of the pressure sensor (4) such that a measurement point at which a humidity measurement takes place lies upstream of a measurement point of a pressure measurement in the sensor terminal, and/or
- the light sensor (20) is arranged upstream of the humidity sensor (2) and the pressure sensor (4).

3. Sensor system (S) according to Claim 1 or 2,
**characterized in that**
- a temperature sensor (5) is integrated into the humidity sensor (2) or the humidity sensor (2) is coupled to a temperature sensor (5), and/or
- a temperature sensor (6) is integrated into the pressure sensor (4) or the pressure sensor (4) is coupled to a temperature sensor (6).

4. Sensor system (S) according to one of the preceding claims,
**characterized in that**
the humidity sensor (2) has outlet-openings (O) that convey a process pressure within the switchgear to the pressure sensor (4).

5. Sensor system (S) according to one of the preceding claims,
**characterized in that**
- electrical contacts transmit electrical signals from the humidity sensor (2) to an evaluation circuit board (7),
- wherein the electrical contacts are sealed in glass and are arranged within the sensor terminal (1).

6. Sensor system (S) according to Claim 5,
**characterized in that**
- the evaluation circuit board (7) determines a temperature-compensated humidity signal on the basis of a temperature recorded by way of the associated temperature sensor (5), and
- transmits the temperature-compensated humidity signal in the form of a digital data signal to a superordinate measurement station or a display via an interface.

7. Sensor system (S) according to one of Claims 3 to 6,
**characterized in that**
- an evaluation circuit board (8) of the pressure sensor (4) determines a temperature-compensated pressure signal on the basis of a temperature recorded by way of the associated temperature sensor (6), and
- transmits the temperature-compensated pressure signal in the form of a digital data signal to a superordinate measurement station or a display via an interface,
and/or
- a density signal determined on the basis of the temperature and of the pressure signal is transmittable in the form of a digital data signal to a superordinate measurement station or a display via an interface.

8. Sensor system (S) according to Claim 6 or 7,
**characterized in that**
- at least one threshold value is stored for the temperature-compensated humidity signal,
- wherein at least one signal generation unit that outputs an additional signal when the at least one threshold value is reached or exceeded is provided.

9. Sensor system (S) according to one of the preceding claims,
**characterized in that**
the light sensor (20) is coupled to at least one light guide (21) in order to transmit the light flash from a point of origin to the light sensor (20).

10. Sensor system (S) according to Claim 9,
**characterized in that**
the light guide (21), on a side facing the process, comprises a coupling apparatus for adjusting an external light source in order to perform a function test.

11. Sensor system (S) according to Claim 9 or 10,
**characterized by**
- an integrated self-test apparatus for one-off or cyclical device diagnostics,
- wherein the self-test apparatus couples light into the light guide (21) for test purposes by way of an integrated light source and checks a function of the light sensor (20) on the basis of the coupled-in light.

12. Sensor system (S) according to one of Claims 9 to 11,
**characterized in that**
- the light guide (21) is guided through a connection region to the sensor terminal (1) by way of a glass leadthrough and/or the light guide (21) protrudes beyond the sensor terminal (1), and/or
- an optical lens is arranged on a front end (21"), facing the switchgear, of the light guide (21).

13. Sensor system (S) according to one of the preceding claims,
**characterized in that**
the sensor terminal (1) is closed in a sealed manner by way of an adapter, a closure piece or a coupling piece (35), in particular having a free connection diameter d of 15 mm to 25 mm, in particular at least 20 mm.

14. Sensor system (S) according to Claim 13,
**characterized in that**
an interior (40") surrounded by the coupling piece (35) is evacuated or filled with an inert gas.

15. Switchgear that is filled in particular with an inert gas, comprising at least one sensor system (S) according to one of the preceding claims.

## Revendications

1. Système de capteurs (S) pour déterminer des grandeurs physiques d'une installation de distribution électrique, comprenant
- un connecteur de capteur (1) réalisé pour une connexion à l'installation de distribution électrique, à l'intérieur duquel sont disposés
- un capteur d'humidité (2), et
- un capteur de pression (4), et
- un capteur de lumière (20) pour détecter des impulsions optiques.

2. Système de capteurs (S) selon la revendication 1, **caractérisé en ce que**
- le capteur d'humidité (2) est placé en amont du capteur de pression (4) de telle sorte qu'un point de mesure auquel est effectuée une mesure d'humidité se trouve dans le connecteur de capteur avant un point de mesure d'une mesure de pression, et/ou
- le capteur de lumière (20) est placé en amont du capteur d'humidité (2) et du capteur de pression (4).

3. Système de capteurs (S) selon la revendication 1 ou 2, **caractérisé en ce que**
- un capteur de température (5) est intégré dans le capteur d'humidité (2) ou le capteur d'humidité (2) est couplé à un capteur de température (5), et/ou
- un capteur de température (6) est intégré dans le capteur de pression (4) ou le capteur de pression (4) est couplé à un capteur de température (6).

4. Système de capteurs (S) selon l'une quelconque des revendications précédentes, **caractérisé en ce que** le capteur d'humidité (2) présente des ouvertures de passage (O) amenant au capteur de pression (4) une pression de processus à l'intérieur de l'installation de distribution électrique.

5. Système de capteurs (S) selon l'une quelconque des revendications précédentes, **caractérisé en ce que**
- des contacts électriques transmettent des signaux électriques du capteur d'humidité (2) à un circuit imprimé d'évaluation (7),
- les contacts électriques étant vitrifiés et disposés à l'intérieur du connecteur de capteur (1).

6. Système de capteurs (S) selon la revendication 5, **caractérisé en ce que**
- le circuit imprimé d'évaluation (7) détermine à l'aide d'une température détectée au moyen du capteur de température associé (5) un signal d'humidité compensé en température, et
- transmet le signal d'humidité compensé en température par l'intermédiaire d'une interface sous forme de signal de données numérique à un poste de mesure de niveau supérieur ou à un affichage.

7. Système de capteurs (S) selon l'une quelconque des revendications 3 à 6, **caractérisé en ce que**
- un circuit imprimé d'évaluation (8) du capteur de pression (4) détermine, à l'aide d'une température détectée au moyen du capteur de température associé (6), un signal de pression compensé en température, et
- transmet le signal de pression compensé en température par l'intermédiaire d'une interface sous la forme d'un signal de données numérique à un poste de mesure de niveau supérieur ou à un affichage, et/ou
- un signal de densité déterminé à l'aide de la température et du signal de pression peut être transmis par l'intermédiaire d'une interface sous la forme d'un signal de données numérique à un poste de mesure de niveau supérieur ou à un affichage.

8. Système de capteurs (S) selon la revendication 6 ou 7, **caractérisé en ce que**
- au moins une valeur seuil est mémorisée pour le signal d'humidité compensé en température,
- au moins une unité de génération de signal étant prévue qui délivre un signal supplémentaire lorsque ladite au moins une valeur seuil est atteinte ou dépassée.

9. Système de capteurs (S) selon l'une quelconque des revendications précédentes, **caractérisé en ce que** le capteur de lumière (20) est couplé à au moins un guide de lumière (21) pour transmettre des impulsions optiques d'un point d'origine au capteur de lumière (20).

10. Système de capteurs (S) selon la revendication 9, **caractérisé en ce que** le guide de lumière (21) comprend sur un côté orienté processus un dispositif de couplage pour adapter une source de lumière externe en vue d'effectuer un essai de fonctionnement.

11. Système de capteurs (S) selon la revendication 9 ou 10, **caractérisé par**
- un dispositif d'autotest intégré pour un diagnostic d'appareil unique ou cyclique,
- dans lequel le dispositif d'autotest injecte, au moyen d'une source de lumière intégrée, de la lumière dans le guide de lumière (21) et vérifie, à l'aide de la lumière injectée, une fonction du capteur de lumière (20).

12. Système de capteurs (S) selon l'une quelconque des revendications 9 à 11, **caractérisé en ce que**
- le guide de lumière (21) est guidé au moyen d'une traversée de verre jusqu'au connecteur de capteur (1) à travers une zone de connexion et/ou le guide de lumière (21) dépasse du connecteur de capteur (1), et/ou
- une lentille optique est disposée à une extrémité avant (21") du guide de lumière (21), tournée vers l'installation de distribution électrique.

13. Système de capteurs (S) selon l'une quelconque des revendications précédentes, **caractérisé en ce que** le connecteur de capteur (1) est fermé de manière étanche par un adaptateur, un obturateur ou une pièce de couplage (35), en particulier d'un diamètre de connexion libre d de 15 mm à 25 mm, en particulier d'au moins 20 mm.

14. Système de capteurs (S) selon la revendication 13, **caractérisé en ce qu'**un espace intérieur (40") entouré par la pièce de couplage (35) est évacué ou rempli d'un gaz inerte.

15. Installation de distribution électrique, en particulier remplie d'un gaz inerte, comprenant au moins un système de capteurs (S) selon l'une quelconque des revendications précédentes.
